# EUROPÄISCHE PATENTSCHRIFT

(11) **EP 1 208 631 B1**
(45) Veröffentlichungstag und Bekanntmachung des Hinweises auf die Patenterteilung: **01.12.2004**
(21) Anmeldenummer: 01956324.6
(22) Anmeldetag: 17.07.2001
(51) Int. Cl.: H02K 21/18

(54) **UNIPOLAR-TRANSVERSALFLUSSMASCHINE**
UNIPOLAR TRANSVERSE FLUX MACHINE
MACHINE UNIPOLAIRE A FLUX TRANSVERSAL

(30) Priorität: 26.07.2000 DE 10036288
(43) Veröffentlichungstag der Anmeldung: 29.05.2002
(73) Patentinhaber: ROBERT BOSCH GMBH, 70442 Stuttgart (DE)
(72) Erfinder: KASTINGER, Guenter, 76571 Gaggenau-Sulzbach (DE)
(86) Internationale Anmeldenummer: PCT/DE2001/002668
(87) Internationale Veröffentlichungsnummer: WO 2002/009261

(56) Entgegenhaltungen:
- WO-A-97/42699
- DE-A- 3 927 454
- US-A- 2 519 097
- US-A- 4 306 164
- US-A- 4 330 727
- PATENT ABSTRACTS OF JAPAN vol. 014, no. 553 (E-1010), 7. Dezember 1990 (1990-12-07) -& JP 02 237451 A (SHOHEI IMAMURA;OTHERS: 01), 20. September 1990 (1990-09-20)

## Beschreibung

### Stand der Technik

Die Erfindung geht aus von einer Unipolar-Transversalflußmaschine nach dem Oberbegriff des Anspruchs 1.

Aus der WO 97 42699 A geht eine Unipolar-Transversalflußmaschine, insbesondere Unipolar-Transversalflußmotor, hervor, mit einem auf einer Rotorwelle drehfest sitzenden Rotor, der aus jeweils zwei koaxialen, ferromagnetischen Rotorringen, die an ihrem von der Rotorwelle abgekehrten Außenumfang mit konstanter Zahnteilung gezahnt sind, und einem zwischen den Rotorringen axial eingespannten, axial unipolar magnetisierten Permanentmagnetring zusammengesetzt ist, und mit einem zur Rotorwelle konzentrischen Stator, der U-förmige, durch einen Quersteg miteinander verbundene Jochschenkel aufweisende Statorjoche, die mit einer der Zahnteilung entsprechenden Teilung an einem Gehäuse festgelegt und so angeordnet sind, daß der eine Jochschenkel dem einen Rotorring und der andere Jochschenkel dem anderen Rotorring jeweils mit radialem Spaltabstand gegenübersteht, und Rückschlußelemente, von denen jeweils eines zwischen in Drehrichtung des Rotor aufeinanderfolgenden Statorjochen angeordnet ist, sich axial über beide Rotorringe erstreckt und diesen mit radialem Spaltabstand gegenübersteht, sowie eine Statorwicklung besitzt.

Bei einer anderen Unipolar-Transversalflußmaschine gemäß der nicht vorveröffentlichten DE 100 39 466 ist vorgeschlagen, die Statorwicklung als Ringspule auszubilden, die koaxial zur Rotorachse angeordnet ist und sich auf der von der Rotorachse abgekehrten Außenseite der Rückschlußelemente durch die Jochschenkel der Statorjoche hindurch erstreckt. Dabei kann die Maschine einsträngig, also mit einem Statormodul und einem Rotormodul, oder mehrsträngig mit mindestens zwei Stator- und Rotormodulen ausgeführt werden, wobei jedes der axial nebeneinander angeordneten Statormodule eine solche Ringspule besitzt. Bei der zweisträngigen Ausführung sind die Stator- oder Rotormodule zumindest um 90° elektrisch zueinander versetzt angeordnet, und die Ringspulen werden bipolar in Abhängigkeit vom Drehwinkel des Rotors mit Stromimpulsen bestromt. Die einsträngige Maschine mit nur einem Rotor- und Statormodul hat den Nachteil, daß sie nicht eigenständig anlaufen kann und zum Anlauf zusätzliche Hilfsmaßnahmen vorgesehen werden müssen. Sie hat jedoch den Vorteil einer extrem flachen Bauweise.

Aus der US 4 330 727 A ist ein elektrischer Schrittmotor bekannt, der einem scheibenförmigen, axial magnetisierten Rotor mit zwei alternierenden magnetischen Polen an jeder Seite hat. Ein Stator umfasst zwei Gruppen von magnetischen Kreisen, von denen jeder einen Luftspalt aufweist, der mit dem Rotor zusammenwirkt. Der magnetische Kreis ist mit wenigstens einer elektrischen Spule gekuppelt.

Aus der DE 39 27 454 A geht eine Transfersalflußmaschine hervor, die einen Stator mit zwei Spulen mit je zwei Spulenseiten aufweist, deren eine Spulenseite sich koaxial zur Rotorwelle jeweils über eine Gruppe von in Umfangsrichtung aufeinanderfolgenden Statorjochen zwischen den Jochschenkeln hindurch erstreckt, und daß die von der Spulenseite der einen Spulen überspannte Gruppe gegenüber der von der Spulenseite der anderen Spule überspannte Gruppe um 90° elektrisch am Statorumfang räumlich versetzt angeordnet ist.

In der US 2 519 097 A ist eine elektrische Maschine offenbart, umfassend einen Rotor, der mit komplementären Polseiten, die axial beanstandet auf ihm angeordnet und magnetisiert sind, einen Stator, der einem magnetischen Pfad zwischen den komplementären Polseiten liefert, und eine Wicklung auf dem Stator.

### Vorteile der Erfindung

Die Erfindung ist durch die Merkmale von Anspruch 1 definiert. Die erfindungsgemäße Unipolar-Transversalflußmaschine hat den Vorteil einer extrem flachen Bauweise und eines durch die Zweisträngigkeit des Stators gewährleisteten definierten Anlaufs in eine bestimmte Richtung.

Durch die in den weiteren Ansprüchen aufgeführten Maßnahmen sind vorteilhafte Weiterbildungen und Verbesserungen der im Anspruch 1 angegebenen Unipolar-Transversalflußmaschine möglich.

### Zeichnung

Die Erfindung ist anhand eines in der Zeichnung dargestellten Ausführungsbeispiels in der nachfolgenden Beschreibung näher erläutert. Es zeigen:
- Fig. 1: eine perspektivische Darstellung eines Unipolar-Transversalflußmotors,
- Fig. 2: einen Schnitt längs der Linie II - II in Fig. 1,
- Fig. 3: ein Diagramm der Bestromung des Stators des Motors.

### Beschreibung des Ausführungsbeispiels

Der in der Zeichnung in verschiedenen Ansichten und Schnitten dargestellte Unipolar-Transversalflußmotor als Ausführungsbeispiel für eine allgemeine Unipolar-Transversalflußmaschine weist einen Stator 11 sowie einen im Stator 11 umlaufenden Rotor 12 auf, der drehfest auf einer Rotorwelle 13 sitzt.

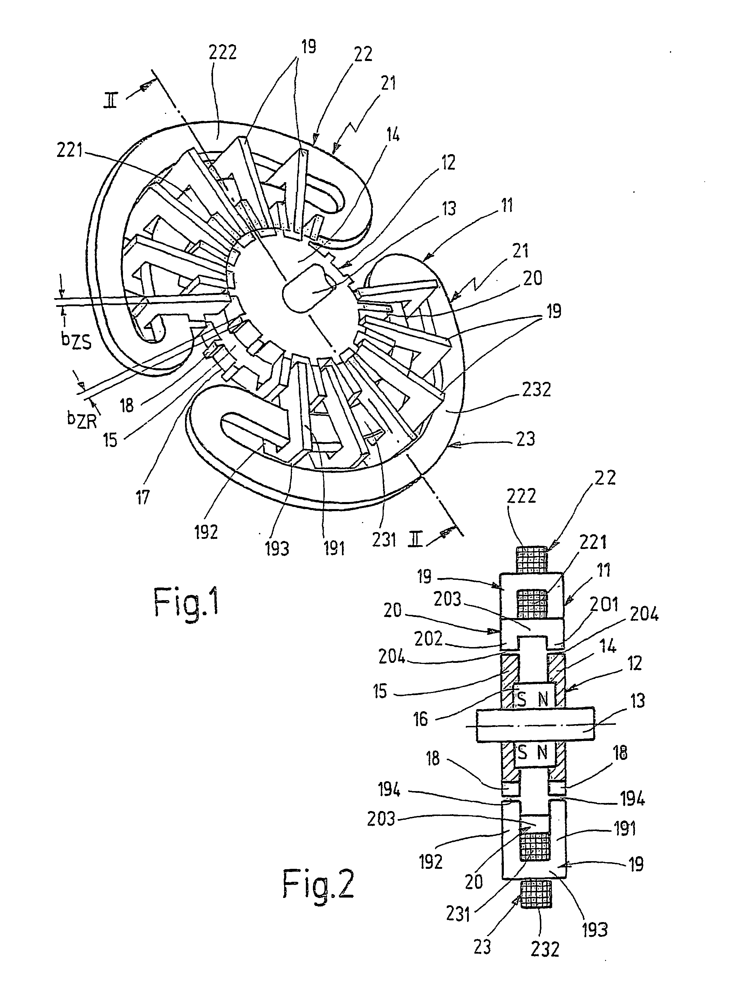

Der Rotor 12 besteht aus zwei koaxialen, ferromagnetischen Rotorringen 14, 15 (Fig. 2), die drehfest auf der Rotorwelle 13 sitzen und zwischen sich einen Permanentmagnetring 16 einspannen, der in axialer Richtung, also in Richtung der Rotor- oder Gehäuseachse, unipolar magnetisiert ist. In Fig. 2 ist beispielhaft die Richtung der Magnetisierung des Permanentmagnetrings 16 mit N-S angegeben. Jeder Rotorring 14, 15 ist an seinem von der Rotorwelle 13 abgekehrten Außenumfang mit konstanter Zahnteilung gezahnt, so daß die durch jeweils eine Zahnlücke 17 voneinander getrennten Zähne 18 der sich ergebenden Zahnreihe einen gleichen Drehwinkelabstand voneinander haben. Die Zähne 18 am Rotorring 14 und am Rotorring 15 fluchten in Axialrichtung miteinander. Die Rotorringe 14, 15 mit den daran einstückig angeformten Zähnen 18 sind lamelliert und werden bevorzugt aus gleichen Blechstanzschnitten, die in Achsrichtung aneinanderliegen, zusammengesetzt.

Der zum Rotor 12 koaxial angeordnete Stator 11 weist U-förmige Statorjoche 19 mit zwei durch einen Quersteg 193 verbundenen, langen Jochschenkeln 191, 192, zwischen den Statorjochen 19 angeordnete Rückschlußelemente 20, die im Ausführungsbeispiel U-Form mit zwei jeweils durch einen Quersteg 203 miteinander verbundenen, kurzen Schenkeln 201, 202 besitzen, und eine Statorwicklung 21 auf. Die die Statorpole bildenden Statorjoche 19 und Rückschlußelemente 20 sind lamelliert und aus Stanzblechen zu Blechpaketen zusammengesetzt, wobei die Breite b_{ZS} der Statorjoche 19 und die Breite der Rückschlußelemente 20, jeweils in Drehrichtung gemessen, in etwa gleich groß ist. Dabei ist das Verhältnis der Zahnbreite b_{ZR} der Zähne 18 an dem Rotorring 14, 15 zur Breite b_{ZS} der Statorjoche 19 und Rückschlußelemente 20 (jeweils in Drehrichtung gesehen) größer als 1 und kleiner als 2, vorzugsweise gleich oder kleiner 1,5, gewählt. Die Statorjoche 19 sind mit einer der Zahnteilung entsprechenden Teilung am Gehäuse 10 festgelegt und so angeordnet, daß der eine Jochschenkel 191 dem einen Rotorring 14 und der andere Jochschenkel 192 dem anderen Rotorring 15 jeweils mit radialem Spaltabstand gegenübersteht (Fig. 2). Zwischen den Statorjochen 19 ist jeweils ein Rückschlußelement 20 im Abstand der halben Jochteilung von den Statorjochen 19 s angeordnet, wobei ein gewiser Versatz zulässig ist, um z. B. Momentrippel zu reduzieren. Die Rückschlußelemente 20 sind untereinander wiederum um eine Jochteilung versetzt. Die Rückschlußelemente 20 erstrecken sich über beide Rotorringe 14, 15 und liegen mit ihren kurzen Schenkeln 201, 202 den Rotorringen 14, 15 jeweils mit Spaltabstand gegenüber. Der Spaltabstand zwischen den Statorjochen 19 und den Rotorringen 14, 15 einerseits und zwischen den Rückschlußelementen 20 und den Rotorringen 14, 15 andererseits ist gleich.groß bemessen. Die freien Stirnflächen 194 der Jochschenkel 191, 192 der Statorjoche 19 weisen mindestens die gleiche axiale Breite wie die Rotorringe 14, 15 auf oder stehen vorzugsweise über letztere ein- oder beidseitig vor. Das gleiche gilt für die Rückschlußelemente 20, bei denen ebenfalls die freien Stirnflächen 204 zumindest die gleiche axiale Breite wie die Rotorringe 14, 15 aufweisen oder über diese ein- oder beidseitig vorstehen.

Die Statorwicklung 21 besteht aus zwei identischen, hier beispielsweise nierenförmigen Spulen 22, 23 (Fig. 1) mit jeweils zwei Spulenseiten 221, 222 bzw. 231, 232. Die eine Spulenseite 221 bzw. 231 jeder Spule 22 bzw. 23 verläuft koaxial zur Rotorachse bzw. Rotorwelle 13 und erstreckt sich über eine Gruppe von in Umfangsrichtung aufeinanderfolgenden Statorjochen 19 und Rückschlußelementen 20, wobei die Spulenseite 221 bzw. 231 auf der von der Rotorwelle 13 abgekehrten Seite der Rückschlußelemente 20 zwischen den Jochschenkeln 191 und 192 der Statorjoche 19 hindurch verläuft. Jede Gruppe weist eine gleiche Anzahl von in Umfangsrichtung aufeinanderfolgenden Statorjochen 19 und Rückschlußelementen 20 auf, die im Ausführungsbeispiel sechs Statorjoche 19 und sechs Rückschlußelemente 20 umfaßt. Dabei ist die von der Spulenseite 221 der Spule 22 überspannte obere Gruppe gegenüber der von der Spulenseite 231 der Spule 23 überspannte untere Gruppe von jeweils insgesamt zwölf Statorjochen 19 und Rückschlußelemente 20 um 90° elektrisch am Umfang versetzt angeordnet. In Fig. 1 ist dies dadurch zu erkennen, daß die Rückschlußelemente 20 der von der Spulenseite 231 überspannten unteren Gruppe mit den Zähnen 18 des Rotors 12 radial fluchten, während die Rückschlußelemente 20 in der von der Spulenseite 221 überspannten oberen Gruppe gegenüber den Zähnen 18 des Rotors 12 in Umfangsrichtung versetzt sind. Bei einer Zähnezahl von sechzehn und damit einer Zahnteilung von 22,5° entspricht der Versatz der beiden Gruppen aus Statorjochen 19 und Rückschlußelementen 20 gegeneinander 5,625° Umfangswinkel. Die andere Spulenseite 221 bzw. 232 der Spule 22 bzw. 23 verläuft auf der von der Rotorwelle 13 abgekehrten Außenseite der Statorjoche 19 über deren Quersteg 193 entlang ebenfalls koaxial zur Rotorwelle 13 und hat ebenso wie die Spulenseite 221 bzw. 231 eine kreisabschnittförmige Ausformung.

Zur Realisierung des Versatzes von 90° elektrisch der beiden Gruppen von Statorjochen 19 und Rückschlußelementen 20 und zur Unterbringung von Wickelköpfen der Spulen 22, 23 ist die Anzahl der einer Gruppen zugehörigen Statorjoche 19 kleiner als die sich aus der Zahn- oder Jochteilung ergebende größtmögliche Anzahl von Statorjochen 19. Im Ausführungsbeispiel der Fig. 1 hat der Rotor 12 sechzehn Zähne 18. Die maximal mögliche Anzahl der Statorjoche 19 ist damit ebenfalls sechzehn, ebenso wie die maximal mögliche Anzahl der Rückschlußelemente 20. Im Ausführungsbeispiel der Fig. 1 sind jeder Spule 22, 23 aber nur sechs Statorjoche 19 und sechs Rückschlußelemente 20 zugeordnet, die zusammen insgesamt zwölf Pole für jede Spule 22, 23 ergeben, wobei die Spulen 22, 23 mit den jeweiligen Polen zueinander diametral angeordnet sind, um in den polfreien Räumen die Wickelköpfe der Spulen 22, 23 unterzubringen.

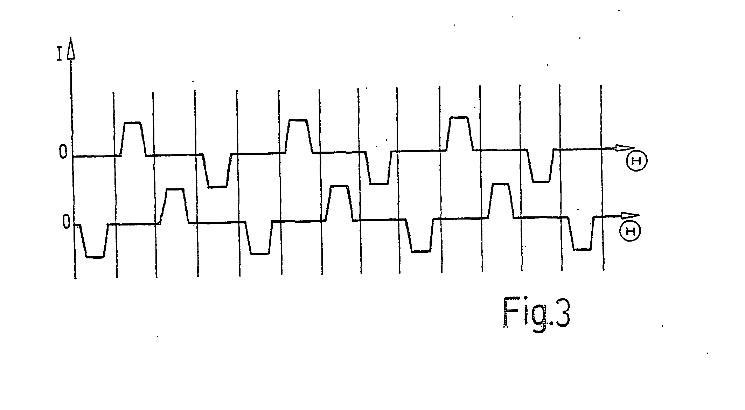

Die beiden Spulen 22, 23, die jeweils eine Wicklungsphase oder einen Wicklungsstrang eines zweiphasigen, permanentmagneterregten Motors darstellen, werden bipolar in Abhängigkeit vom Drehwinkel des Rotors 12 mit Stromimpulsen bestromt, wobei die Stromimpulse in den Spulen 22, 23 um beispielhaft 90° gegeneinander phasenverschoben sind. Das Bestromungsmuster für die beiden Spulen 22, 23 ist in Fig. 3 in Abhängigkeit vom Drehwinkel Θ des Rotors 12 dargestellt. Der Drehwinkelabstand zwischen den eingezeichneten vertikalen Linien beträgt jeweils 5,625°.

## Patentansprüche

1. Unipolar-Transversalflußmaschine, insbesondere Unipolar-Transversalflußmotor, mit einem auf einer Rotorwelle (13) drehfest sitzenden Rotor (12), der aus jeweils zwei koaxialen, ferromagnetischen Rotorringen (14, 15), die an ihrem von der Rotorwelle (13) abgekehrten Außenumfang mit konstanter Zahnteilung gezahnt sind, und einem zwischen den Rotorringen (14, 15) axial eingespannten, axial unipolar magnetisierten Permanentmagnetring (16) zusammengesetzt ist, und mit einem zur Rotorwelle (13) konzentrischen Stator (11), der U-förmige, durch einen Quersteg (193) miteinander verbundene Jochschenkel (191, 192) aufweisende Statorjoche (19), die mit einer der Zahnteilung entsprechenden Teilung an einem Gehäuse (10) festgelegt und so angeordnet sind, daß der eine Jochschenkel (191) dem einen Rotorring (14) und der andere Jochschenkel (192) dem anderen Rotorring (15) jeweils mit radialem Spaltabstand gegenübersteht, und Rückschlußelemente (20), von denen jeweils eines zwischen in Drehrichtung des Rotor(12) aufeinanderfolgenden Statorjochen (19) angeordnet ist, sich axial über beide Rotorringe (14, 15) erstreckt und diesen mit radialem Spaltabstand gegenübersteht, sowie eine Statorwicklung (21) besitzt, **dadurch gekennzeichnet, daß** die Statorwicklung (21) zwei Spulen (22, 23) mit je zwei Spulenseiten (221, 222 bzw. 231, 232) aufweist, deren eine Spulenseite (221 bzw. 231) sich koaxial zur Rotorwelle (13) jeweils über eine Gruppe von in Umfangsrichtung aufeinanderfolgenden Statorjochen (19) und Rückschlußelementen (20) längs der von der Rotorwelle (13) abgekehrten Seite der Rückschlußelemente (20) zwischen den Jochschenkeln (191, 192) hindurch erstreckt, und daß die von der Spulenseite (221) der einen Spule (22) überspannte Gruppe gegenüber der von der Spulenseite (231) der anderen Spule (23) überspannte Gruppe um 90° elektrisch am Statorumfang räumlich versetzt angeordnet ist.

2. Maschine nach Anspruch 1, **dadurch gekennzeichnet, daß** die andere Spulenseite (222 bzw. 232) der beiden Spulen (22, 23) auf der von der Rotorwelle (13) abgekehrten Außenseite der Querstege (193) der Statorjoche (19) verläuft.

3. Maschine nach Anspruch 1 oder 2, **dadurch gekennzeichnet, daß** jede Gruppe eine gleiche Anzahl von in Umfangsrichtung aufeinanderfolgenden Statorjochen (19) und Rückschlußelementen (20) aufweist.

4. Maschine nach einem der Ansprüche 1 - 3, **dadurch gekennzeichnet, daß** die Anzahl der von den einen Spulenseiten (221, 231) der beiden Spulen (22, 23) insgesamt überspannten Statorjoche (19) kleiner ist als die sich aus der Zahn- oder Jochteilung ergebende größtmögliche Anzahl von Statorjochen (19).

5. Maschine nach einem der Ansprüche 1 - 4, **dadurch gekennzeichnet, daß** die beiden Spulen (22, 23) bipolar in Abhängigkeit vom Drehwinkel (Θ) des Rotors (12) mit Stromimpulsen bestromt werden und daß die Stromimpulse in den Spulen (22, 23) insbesondere um 90° gegeneinander phasenverschoben sind.

6. Maschine nach einem der Ansprüche 1 - 5, **dadurch gekennzeichnet, daß** die Statorjoche (19) und die Rückschlußelemente (20) sowie die Rotorringe (14, 15) lamelliert sind.

7. Maschine nach einem der Ansprüche 1 - 6, **dadurch gekennzeichnet, daß** die Rückschlußelemente (20) um insbesondere eine halbe Jochteilung zu den Statorjochen (19) versetzt angeordnet sind.

8. Maschine nach eine der Ansprüche 1 - 7, **dadurch gekennzeichnet, daß** der radiale Spaltabstand zwischen den Statorjochen (19) und den Rotorringen (14, 15) einerseits und zwischen den Rückschlußelementen (20) und den Rotorringen (14, 15) andererseits gleich groß bemessen ist.

9. Maschine nach einem der Ansprüche 1 - 8, **dadurch gekennzeichnet, daß** die freien Stirnflächen (194) der Jochschenkel (191, 192) der Statorjoche (19) mindestens die gleiche axiale Breite wie die Rotorringe (14, 15) aufweisen, vorzugsweise über letztere ein- oder beidseitig vorstehen.

10. Maschine nach einem der Ansprüche 1 - 9, **dadurch gekennzeichnet, daß** die Breite der Statorjoche (19) und die Breite der Rückschlußelemente (20), jeweils in Drehrichtung gemessen, in etwa gleich groß ist.

11. Maschine nach einem der Ansprüche 1 - 10, **dadurch gekennzeichnet, daß** das Verhältnis der Zahnbreite (b_{ZR}) der Zähne (18) an den Rotorringen (14, 15) zur Breite (b_{ZS}) der Statorjoche (19) und Rückschlußelemente (20) jeweils in Drehrichtung gesehen, größer als 1 und kleiner als 2, vorzugsweise gleich oder kleiner 1,5, gewählt ist.

12. Maschine nach einem der Ansprüche 1 - 11, **dadurch gekennzeichnet, daß** die Rückschlußelemente (20) U-Form mit zwei jeweils einem Rotorring (14, 15) radial gegenüberliegenden, kurzen Schenkeln (201, 202) und einem diese miteinander verbindenden Quersteg (203) aufweisen.

13. Maschine nach Anspruch 12, **dadurch gekennzeichnet, daß** die freien Stirnflächen (204) der kurzen Schenkel (201, 202) der Rückschlußelemente (20) zumindest die gleiche axiale Breite wie die Rotorringe (14, 15) aufweisen, vorzugsweise über diese ein- oder beidseitig vorstehen.

## Claims

1. Unipolar transverse flux machine, in particular a unipolar transverse flux motor, having a rotor (12) which is seated in a rotationally fixed manner on a rotor shaft (13) and is composed of in each case two coaxial, ferromagnetic rotor rings (14, 15) which have teeth with a constant tooth pitch on their outer circumference facing away from the rotor shaft (13), and having a permanent magnet ring (16) which is clamped in axially between the rotor rings (14, 15) and is magnetized axially in a unipolar manner, and having a stator (11) which is concentric with respect to the rotor shaft (13), which has U-shaped stator yokes (19), which have yoke limbs (191, 192) which are connected to one another by means of a transverse web (193), are fixed on a housing (10) with a pitch corresponding to the tooth pitch, and are arranged such that the first yoke limb (191) is opposite the first rotor ring (14), and the other yoke limb (192) is opposite the other rotor ring (15), in each case separated by a radial gap, and magnetic return path elements (20) of which one is in each case arranged between successive stator yokes (19) in the rotation direction of the rotor (12), extends axially beyond both rotor rings (14, 15) and is opposite them, separated by a radial gap, as well as a stator winding (21), **characterized in that** the stator winding (21) has two coils (22, 23), each having two coil faces (221, 222 and 231, 232, respectively), whose one coil face (221 or 231, respectively) in each case extends coaxially with respect to the rotor shaft (13) over a group of stator yokes (19) and magnetic return path elements (20), which follow one another in the circumferential direction, along that side of the magnetic return path elements (20) which faces away from the rotor shaft (13), between the yoke limbs (191, 192), and **in that** the group, which is covered by the coil face (221) of the first coil (22), is arranged such that it is physically offset through 90° electrical on the stator circumference with respect to the group which is covered by the coil face (231) of the other coil (23).

2. Machine according to Claim 1, **characterized in that** the other coil face (222 or 232, respectively) of the two coils (22, 23) runs on the outside of the transverse webs (193) of the stator yokes (19), facing away from the rotor shaft (19).

3. Machine according to Claim 1 or 2, **characterized in that** each group has the same number of stator yokes (19) and magnetic return path elements (20) following one another in the circumferential direction.

4. Machine according to one of Claims 1 - 3, **characterized in that** the number of stator yokes (19) which are covered in total by the first coil faces (221, 231) of the two coils (22, 23) is less than the greatest possible number of stator yokes (19) resulting from the tooth pitch or yoke pitch.

5. Machine according to one of Claims 1 - 4, **characterized in that** current pulses flow in both directions through the two coils (22, 23) depending on the rotation angle (Θ) of the rotor (12), and **in that** the current pulses in the coils (22, 23) are phase-shifted with respect to one another, in particular through 90°.

6. Machine according to one of Claims 1 - 5, **characterized in that** the stator yokes (19) and the magnetic return path elements (20) as well as the rotor rings (14, 15) are laminated.

7. Machine according to one of Claims 1 - 6, **characterized in that** the magnetic return path elements (20) are arranged such that they are offset, in particular through half a yoke pitch, with respect to the stator yokes (19).

8. Machine according to one of Claims 1 - 7, **characterized in that** the size of the radial gap between the stator yokes (19) and the rotor rings (14, 15) on the one hand, and between the magnetic return path elements (20) and the rotor rings (14, 15) on the other hand, is the same.

9. Machine according to one of Claims 1 - 8, **characterized in that** the free end surfaces (194) of the yoke limbs (191, 192) of the stator yokes (19) have at least the same axial width as the rotor rings (14, 15), and preferably project beyond the latter on one or both sides.

10. Machine according to one of Claims 1 - 9, **characterized in that** the width of the stator yokes (19) and the width the magnetic return path elements (20) is of approximately the same size, in each case measured in the rotation direction.

11. Machine according to one of Claims 1 - 10, **characterized in that** the ratio of the tooth width (b_{ZR}) of the teeth (18) on the rotor rings (14, 15) to the width (b_{ZS}) of the stator yokes (19) and of the magnetic return path elements (20), in each case seen in the rotation direction, is chosen to be greater than 1 and less than 2, and preferably less than or equal to 1.5.

12. Machine according to one of Claims 1 - 11, **characterized in that** the magnetic return path elements (20) are U-shaped with two short limbs (201, 202), which are each radially opposite a rotor ring (14, 15), and with a transverse web (203) connecting them to one another.

13. Machine according to Claim 12, **characterized in that** the free end surfaces (204) of the short limbs (201, 202) of the magnetic return path elements (20) have at least the same axial width as the rotor rings (14, 15), and preferably project beyond them on one or both sides.

## Revendications

1. Machine unipolaire à flux transversal, notamment moteur unipolaire à flux transversal, comprenant un rotor (12) solidaire en rotation sur un arbre de rotor (13) et composé de respectivement deux bagues de rotor (14, 15) ferromagnétiques coaxiales qui à leur périphérie extérieure opposée à l'arbre de rotor (13) présentent une denture à pas de dents constants, une bague magnétique permanente (16) magnétisée de façon unipolaire dans le sens axial et enserrée axialement entre les bagues de rotor (14, 15), un stator (11) concentrique par rapport à l'arbre de rotor (13) avec des culasses de stator (19) présentant des branches de culasse (191, 192) en forme de U reliées les unes aux autres par une nervure transversale (193), fixées sur un boîtier (10) selon un pas correspondant au pas des dents et disposées de telle sorte que l'une des branches de culasse (191) se trouve en regard de l'une des bagues de rotor (14) et l'autre branche de culasse (192) en regard de l'autre bague de rotor (15) respectivement à une distance radiale d'entrefer, et possédant des éléments de retour (20) dont respectivement un est disposé entre des culasses de stator (19) se succédant dans le sens de rotation du rotor (12), s'étendant axialement sur les deux bagues de rotor (14, 15) et faisant face à celles-ci à une distance radiale d'entrefer, ainsi qu'un enroulement de stator (21),
**caractérisée en ce que**
l'enroulement de stator (21) présente deux bobines (22, 23) avec respectivement deux faces de bobine (221, 222 ou 231, 232) dont l'une face de bobine (221 ou 231) s'étend coaxialement à l'arbre de rotor (13), chaque fois sur un groupe de culasses de stator (19) et d'éléments de retour (20) se succédant dans le sens périphérique le long de la face des éléments de retour (20) opposée à l'arbre de rotor (13) à travers les branches de culasse (191, 192), et le groupe recouvert par la face de bobine (221) de l'une des bobines (22) par rapport au groupe recouvert par la face de bobine (231) de l'autre bobine est électriquement décalé de 90° en périphérie de stator.

2. Machine selon la revendication 1,
**caractérisée en ce que**
l'autre face de bobine (222 ou 232) des deux bobines (22, 23) s'étend sur la face extérieure des nervures transversales (193) des culasses de stator (19) opposée à l'arbre de rotor (13).

3. Machine selon la revendication 1 ou 2,
**caractérisée en ce que**
chaque groupe présente un même nombre de culasses de stator (19) et d'éléments de retour (20) se succédant dans le sens périphérique.

4. Machine selon l'une quelconque des revendications 1 - 3,
**caractérisée en ce que**
le nombre total des culasses de stator (19) recouvertes par l'une des faces de bobine (221, 231) des deux bobines (22, 23) est inférieur au nombre maximum de culasses de stator (19) résultant des pas des dents ou de culasses.

5. Machine selon l'une quelconque des revendications 1 - 4,
**caractérisée en ce que**
les deux bobines (22, 23) sont alimentées de manière bipolaire en impulsions de courant en fonction de l'angle de rotation (M) du rotor (12), et les impulsions de courant dans les bobines (22, 23) sont déphasées les unes des autres notamment de 90°.

6. Machine selon l'une quelconque des revendications 1 - 5,
**caractérisée en ce que**
les culasses de stator (19) et les éléments de retour (20) ainsi que les bagues de rotor (14, 15) sont lamellés.

7. Machine selon l'une quelconque des revendications 1 - 6,
**caractérisée en ce que**
les éléments de retour (20) sont décalés par rapport aux culasses de stator (19) notamment d'un demi pas de culasse.

8. Machine selon l'une quelconque des revendications 1 - 7,
**caractérisée en ce que**
l'entrefer radial entre les culasses de stator (19) et les bagues de rotor (14, 15) d'une part et entre les éléments de retour (20) et les bagues de rotor (14, 15) d'autre part présentent des dimensions différentes.

9. Machine selon l'une quelconque des revendications 1 - 8,
**caractérisée en ce que**
les faces frontales libres (194) des branches de culasse (191, 192) de la culasse de stator (19) présentent au moins la même largeur axiale que les bagues de rotor (14, 15), saillant de préférence au-delà de ces dernières d'un ou des deux côtés.

10. Machine selon l'une quelconque des revendications 1 - 9,
**caractérisée en ce que**
la largeur de la culasse de stator (19) et la largeur des éléments de retour (20), mesurées respectivement dans le sens de rotation, sont sensiblement identiques.

11. Machine selon l'une quelconque des revendications 1 - 10,
**caractérisée en ce que**
le rapport de largeur de dents (b_{ZR}) des dents (18) au niveau des bagues de rotor (14, 15) par rapport à la largeur (b_{ZS}) des culasses de stator (19) et aux éléments de retour (20), vues respectivement dans le sens de rotation, est supérieur à 1 et inférieur à 2, de préférence égal ou inférieur à 1,5.

12. Machine selon l'une quelconque des revendications 1 - 11,
**caractérisée en ce que**
les éléments de retour (20) présentent la forme d'un U avec deux branches (201, 202) courtes situées chacune radialement en regard d'une bague de rotor (14, 15) ainsi qu'une nervure transversale (203) reliant les deux branches l'une à l'autre.

13. Machine selon la revendication 12,
**caractérisée en ce que**
les faces frontales libres (204) des branches courtes (201, 202) des éléments de retour (20) présentent au moins la même largeur axiale que les bagues de rotor (14, 15), saillant de préférence au-delà de celles-ci d'un ou des deux côtés.
